# EUROPEAN PATENT APPLICATION

(11) **EP 2 590 055 A2**
(43) Date of publication of application: **08.05.2013**
(21) Application number: 12275146.4
(22) Date of filing: 19.09.2012
(51) Int. Cl.: G06F 3/01, G06F 3/03, G06F 3/00

(54) **Remote control apparatus and gesture recognition method for remote control apparatus**

(30) Priority: 01.11.2011 KR 20110112697
(71) Applicant: Samsung Electro-Mechanics Co., Ltd, Suwon, Gyunggi-Do (KR)
(72) Inventor: Kim,, Hyun, Gyunggi-do (KR)
(74) Representative: Powell, Timothy John

(57) **Abstract**

There are a remote control apparatus and a gesture recognition method for a remote control apparatus, capable of allocating control rights to a plurality of objects. The remote control apparatus includes: a camera module; a image signal processing unit; a trigger signal detecting unit; and a gesture signal detecting unit.

## Description

### CROSS-REFERENCE TO RELATED APPLICATIONS

This application claims the priority of Korean Patent Application No. 10-2011-0112697 filed on November 1, 2011, in the Korean Intellectual Property Office, the disclosure of which is incorporated herein by reference.

### BACKGROUND OF THE INVENTION

### Field of the Invention

The present invention relates to a remote control apparatus and a gesture recognition method for a remote control apparatus, capable of allocating control rights to a plurality of objects.

### Description of the Related Art

In the field of television display apparatus, the integration or complexation of several different functions as well as the digitalization and implementation of high definition in a display screen has recently progressed rapidly. Therefore, connections between television display apparatuses and external peripheral digital home appliances have been diversified and types of signals transceived therebetween have been diversified. In the future, it is expected that televisions will be used as main control apparatuses connected to lighting devices, gas devices, heating devices, crime preventing devices, and the like, as well as home appliances, to configure and control home networking.

For example, a traditional television according to the related art has been used merely as a broadcasting display apparatus displaying terrestrial broadcasting received from an antenna or cable broadcasting received through a cable. However, in accordance with the rapid digitalization of peripheral home appliances connected to televisions, recent televisions have been required to serve as complex display apparatuses capable of displaying digital input signals of various formats.

In accordance with the complexation of the role of the television as described above, functions able to be performed by a wireless remote control in order to operate the television have also gradually increased. Accordingly, the number of input buttons provided on the wireless remote control has also increased, such that a user may feel significantly inconvenienced in using such a complicated remote control. In particular, an increase in the complexity of the remote control functions, as described above, may provide significant inconvenience to children or the elderly and infirm. In addition, in the case of a remote control according to the related art, users may not remember a location at which the remote control is located, such that they are required to search for the remote control whenever they wish to watch television. Further, the remote control according to the related art is not environment-friendly, since a battery used as a power supply in the remote control should be replaced by a new battery when a lifespan of the battery ends.

A movement of addressing these problems by using a touch-free type remote control camera module has been recently greater. The touch-free type remote control camera module is used, whereby television channels and television volume may be controlled, while desired image and video files may be selected from an image and video file folder stored in a memory of the television.

However, in the touch-free scheme according to the related art, a method for allocating gesture performing control rights to a specific user when a plurality of users are present in front of a television is not provided. In addition, no a trigger detecting method of searching a user's initial gesture and ending a gesture search is provided.

### SUMMARY OF THE INVENTION

An aspect of the present invention provides a remote control apparatus and a gesture recognition method for a remote control apparatus, capable of allocating control rights to a plurality of objects, continuously detecting a gesture signal, and controlling initiation and termination of gesture signal detection through a trigger signal and a termination signal.

According to an aspect of the present invention, there is provided a remote control apparatus including: a camera module receiving images of a plurality of objects and generating image signals; a image signal processing unit determining whether or not the objects include faces from the image signals generated in the camera module, and extracting display coordinates of faces when the objects include the faces; a trigger signal detecting unit setting a trigger signal detecting region for detecting trigger signals of the objects from the display coordinates of faces extracted from the image signal processing unit and detecting the trigger signals in the set trigger signal detecting region; and a gesture signal detecting unit setting a gesture signal detecting region for detecting gesture signals of the objects from the trigger signal detecting region set in the trigger signal detecting unit and detecting the gesture signals in the set gesture signal detecting region.

The trigger signal detecting unit and the gesture signal detecting unit may be the image signal processing unit.

The trigger signal detecting unit may calculate areas of the faces from the display coordinates of faces and set the trigger signal detecting region having an area corresponding to N times that of the calculated areas of the faces. The trigger signal detecting region may include a first trigger signal detecting region positioned to the left of each of the faces and a second trigger signal detecting region positioned to the right of each of the faces.

The gesture signal detecting region may include a left gesture signal detecting region including the first trigger signal detecting region and regions adjacent to the first trigger signal detecting region and a right gesture signal detecting region including the second trigger signal detecting region and regions adjacent to the second trigger signal detecting region.

The left hand gesture signal detecting region may include a first gesture signal detecting region adjacent to an upper boundary of the first trigger signal detecting region, a second gesture signal detecting region adjacent to a lower boundary of the first trigger signal detecting region, a third gesture signal detecting region adjacent to a left boundary of the first trigger signal detecting region, and a fourth gesture signal detecting region adjacent to a right boundary of the first trigger signal detecting region, and the right gesture signal detecting region may include a fifth gesture signal detecting region adjacent to an upper boundary of the second trigger signal detecting region, a sixth gesture signal detecting region adjacent to a lower boundary of the second trigger signal detecting region, a seventh gesture signal detecting region adjacent to a left boundary of the second trigger signal detecting region, and an eighth gesture signal detecting region adjacent to a right boundary of the second trigger signal detecting region.

The trigger signal detecting unit may calculate areas of the faces from the display coordinates of faces and detect the trigger signals according to a size order of the calculated areas of faces.

Each of the trigger signals may be a signal indicating an operation of horizontally waving a hand.

Each of the trigger signals may be a signal indicating an operation of horizontally waving a hand.

According to another aspect of the present invention, there is provided a gesture recognition method for a remote control apparatus, the gesture recognition method including: receiving images of a plurality of objects from a camera module and generating image signals; determining whether or not the objects include faces from the generated image signals and extracting display coordinates of faces when the objects include the faces; setting a trigger signal detecting region for detecting trigger signals of the objects from the extracted display coordinates of faces and detecting the trigger signals in the set trigger signal detecting region; and setting a gesture signal detecting region for detecting gesture signals of the objects when the trigger signals are detected and detecting the gesture signals in the set gesture signal detecting region.

The trigger signal detecting region may be set to have an area corresponding to N times that of areas of the faces calculated from the display coordinates of faces.

The trigger signal detecting region may include a first trigger signal detecting region positioned to the left of each of the faces and a second trigger signal detecting region positioned to the right of each of the faces.

The detecting of the trigger signals may only be initiated when at least one of the first trigger signal detecting region and the second trigger signal detecting region is secured.

The gesture signal detecting region may include a left gesture signal detecting region including the first trigger signal detecting region and regions adjacent to the first trigger signal detecting region and a right gesture signal detecting region including the second trigger signal detecting region and regions adjacent to the second trigger signal detecting region.

The left hand gesture signal detecting region may include a first gesture signal detecting region adjacent to an upper boundary of the first trigger signal detecting region, a second gesture signal detecting region adjacent to a lower boundary of the first trigger signal detecting region, a third gesture signal detecting region adjacent to a left boundary of the first trigger signal detecting region, and a fourth gesture signal detecting region adjacent to a right boundary of the first trigger signal detecting region, and the right gesture signal detecting region may include a fifth gesture signal detecting region adjacent to an upper boundary of the second trigger signal detecting region, a sixth gesture signal detecting region adjacent to a lower boundary of the second trigger signal detecting region, a seventh gesture signal detecting region adjacent to a left boundary of the second trigger signal detecting region, and an eighth gesture signal detecting region adjacent to a right boundary of the second trigger signal detecting region.

When the gesture signals are each detected in three or more of the first gesture signal detecting region, the second gesture signal detecting region, the third gesture signal detecting region, and the fourth gesture signal detecting region or when the gesture signals are each detected in three or more of the fifth gesture signal detecting region, the sixth gesture signal detecting region, the seventh gesture signal detecting region, and the eighth gesture signal detecting region, it may be considered that a termination signal terminating the detecting of gesture signals is detected.

The trigger signals may be detected according to a size order of areas of the faces calculated from the display coordinates of faces.

When a trigger signal of an object among the trigger signals of the objects is not detected within a preset time, a trigger signal of an object having the next order may be detected.

When all of the trigger signals of the plurality of objects are not detected, a trigger signal of an object having the most preferential order, among the trigger signals of the objects, may be detected.

Each of the trigger signals may be a signal indicating an operation of horizontally waving a hand.

The gesture signal detecting region may have an area corresponding to M times that of the trigger signal detecting region.

When a termination signal is detected in the gesture signal detecting region, the detecting of the gesture signals may be terminated and the detecting of the trigger signals may be initiated.

The termination signal may be an operation of drawing a circle centered on the trigger signal detecting region.

The detecting of the trigger signals may only be initiated when a change in a position of the objects is equal to or smaller than a preset value.

The detecting of gesture signals may only be initiated when the gesture signal detecting region has an area equal to or higher than a preset value.

The detecting of gesture signals may only be initiated when the trigger signals are detected by a preset number of times or more in the detecting of the trigger signals.

When the gesture signal detecting region includes two or more unit blocks and the gesture signals are each detected in a preset number or more of unit blocks, it may be considered that the gesture signals are detected in the gesture signal detecting region.

When differences in a brightness level of unit blocks are equal to or higher than a preset value, it may be considered that the gesture signals are detected in the unit blocks.

The detecting of the trigger signal may only be initiated when the objects including the faces are objects generating the trigger signals.

When differences between color levels of the faces and color levels of hands of the objects generating the trigger signals are equal to or smaller than a preset value, it may be considered that the objects including the faces are objects generating the trigger signals.

The detecting of the gesture signals may be repeated when the gesture signals are detected.

When a termination signal is detected or the gesture signals are not detected for a preset time, the repetition may stop and the detecting of the trigger signals may be re-initiated.

According to another aspect of the present invention, there is provided a gesture recognition method for a remote control apparatus, the gesture recognition method including: receiving images of a plurality of objects from a camera module and generating image signals; determining whether or not the objects include faces from the generated image signals and extracting display coordinates of faces when the objects include the faces; measuring areas of faces from the extracted display coordinates of faces and allocating detection indices to respective objects including the faces; detecting trigger signals of the objects including the faces according to an order of the detection indices; and detecting gesture signals of the objects from which the trigger signals are detected, when the trigger signals are detected.

The detection indices may be integers sequentially allocated from 0 in an order of increasing size of the measured areas of faces.

### BRIEF DESCRIPTION OF THE DRAWINGS

The above and other aspects, features and other advantages of the present invention will be more clearly understood from the following detailed description taken in conjunction with the accompanying drawings, in which:
FIG. 1 is a block diagram showing a configuration of a remote control apparatus according to an embodiment of the present invention;
FIG. 2 is a flow chart of a gesture recognition method for a remote control apparatus according to an embodiment of the present invention;
FIG. 3 is a schematic view showing detection indices respectively allocated to a plurality of objects according to the embodiment of the present invention;
FIG. 4 is a schematic view showing a face area and a trigger signal detecting region according to the face area according to the embodiment of the present invention;
FIG. 5 is a schematic view showing the trigger signal detecting region and a gesture signal detecting region according to the trigger signal detecting region according to the embodiment of the present invention;
FIG. 6 is a schematic view showing the gesture signal detecting region and a gesture signal according to the embodiment of the present invention;
FIG. 7 is a schematic view showing the gesture signal detecting region and unit blocks according to the embodiment of the present invention; and
FIG. 8 is a schematic view showing the gesture signal detecting region and a stop signal according to the embodiment of the present invention.

### DETAILED DESCRIPTION OF THE EMBODIMENTS

Embodiments of the present invention will be described with reference to the accompanying drawings. The embodiments of the present invention may be modified in many different forms and the scope of the invention should not be limited to the embodiments set forth herein. Rather, these embodiments are provided so that this disclosure will be thorough and complete, and will fully convey the concept of the invention to those skilled in the art. In the drawings, the shapes and dimensions may be exaggerated for clarity, and the same reference numerals will be used throughout to designate the same or like components.

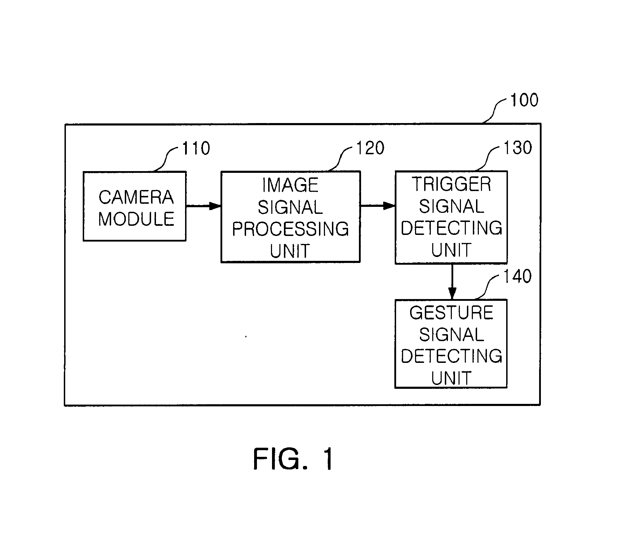

FIG. 1 is a block diagram showing a configuration of a remote control apparatus according to an embodiment of the present invention.

As shown in FIG. 1, a remote control apparatus 100 according to the embodiment of the present invention may include a camera module 110, an image signal processing unit 120, a trigger signal detecting unit 130, and a gesture signal detecting unit 140.

The camera module 110 may receive images of a plurality of objects to generate image signals and transmit the generated image signals to the image signal processing unit 120.

The image signal processing unit 120 may determine whether or not the plurality of objects include faces, from the image signals generated and transferred from the camera module 110, and extract display coordinates of faces in the case in which the plurality of objects include the faces. In this case, an operation of a person who does not view an apparatus to be controlled through the remote control apparatus is not considered as a meaningful operation.

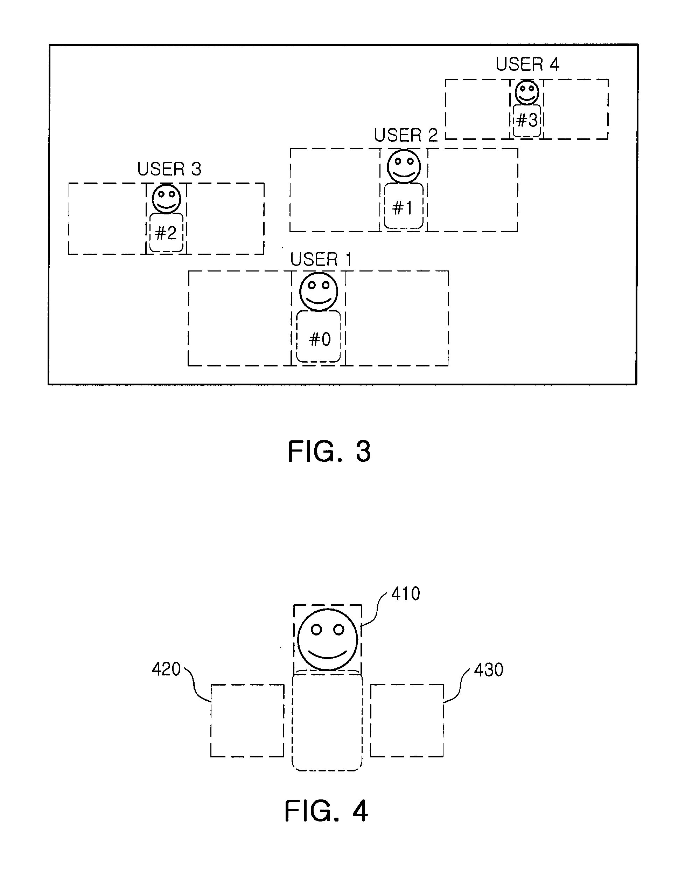

The trigger signal detecting unit 130 may set a trigger signal detecting region for detecting trigger signals of the objects including the faces from the display coordinates of faces extracted from the image signal processing unit 120 and detect the trigger signals in the set trigger signal detecting region. Here, the trigger signal detecting unit 130 may calculate areas of the faces from the display coordinates of faces and set the trigger signal detecting region having an area corresponding to N times that of the calculated areas of faces. Where a default value of N is 2 and a range thereof is from 2 to 4. The set trigger signal detecting region may include a first trigger signal detecting region positioned to the left of the face and a second trigger signal detecting region positioned to the right of the face. The first trigger signal detecting region and the second trigger signal detecting region to be described below are shown in FIG. 4.

In addition, the trigger signal detecting unit 130 may calculate the areas of faces from the display coordinates of faces and detect the trigger signals according to a size order of the calculated areas of faces. In the case that a face of the object is closer to the apparatus to be controlled, the area thereof is greater. Therefore, the closer to the apparatus to be controlled the person, the earlier a control right of a remote control apparatus is allocated. The trigger signal to be detected may be a signal indicating an operation of horizontally waving a hand or other signals.

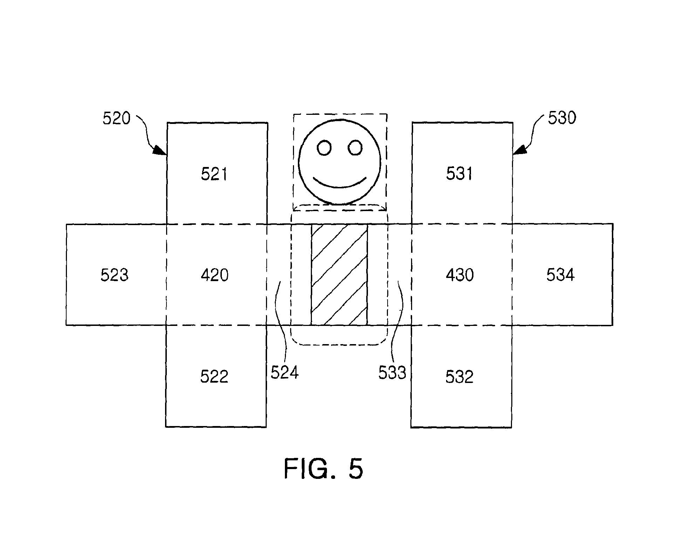

The gesture signal detecting unit 140 may set a gesture signal detecting region for detecting gesture signals of the objects including the faces from the trigger signal detecting region set in the trigger signal detecting unit 130 and detect the gesture signals in the set gesture signal detecting region. The gesture signal detecting unit 140 may set the gesture signal detecting region having an area corresponding to M times that of the trigger signal detecting region. Where a default value of M is 4 and a range thereof is from 4 to 9. The set gesture signal detecting region may include a left gesture signal detecting region including the first trigger signal detecting region and regions adjacent to the first trigger signal detecting region and a right gesture signal detecting region including the second trigger signal detecting region and regions adjacent to the second trigger signal detecting region. The left gesture signal detecting region and the right gesture signal detecting region to be described below are shown in FIG. 5.

In addition, the left gesture signal detecting region may include a first gesture signal detecting region adjacent to an upper boundary of the first trigger signal detecting region, a second gesture signal detecting region adjacent to a lower boundary of the first trigger signal detecting region, a third gesture signal detecting region adjacent to a left boundary of the first trigger signal detecting region, and a fourth gesture signal detecting region adjacent to a right boundary of the first trigger signal detecting region, and the right gesture signal detecting region may include a fifth gesture signal detecting region adjacent to an upper boundary of the second trigger signal detecting region, a sixth gesture signal detecting region adjacent to a lower boundary of the second trigger signal detecting region, a seventh gesture signal detecting region adjacent to a left boundary of the second trigger signal detecting region, and an eighth gesture signal detecting region adjacent to a right boundary of the second trigger signal detecting region. The first gesture signal detecting region to the eighth gesture signal detecting region, to be described below, are shown in FIG. 5.

Further, the trigger signal detecting unit 130 and the gesture signal detecting unit 140 are not independent components, but may be the image signal processing unit 120.

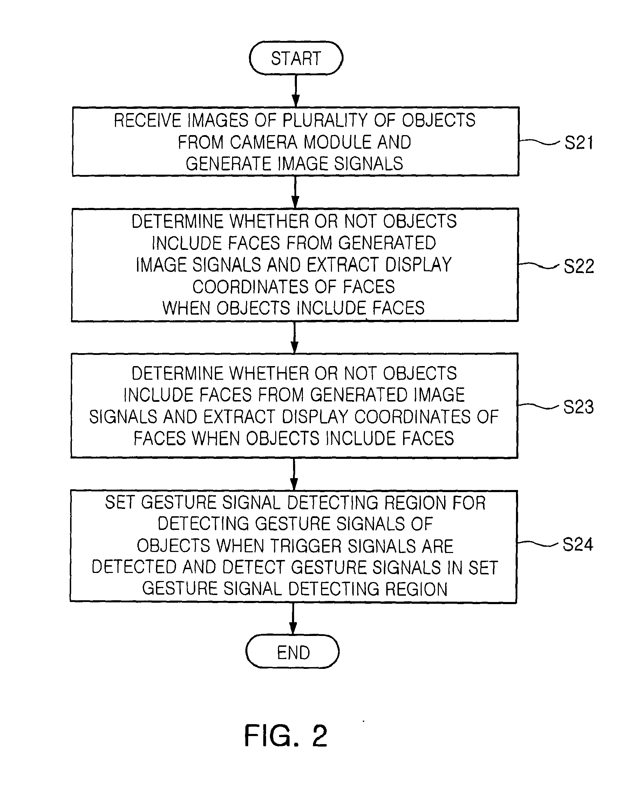

FIG. 2 is a flow chart of a gesture recognition method for a remote control apparatus according to an embodiment of the present invention.

As shown in FIG. 2, the gesture recognition method for a remote control apparatus according to the embodiment of the present invention may include: receiving images of a plurality of objects from a camera module and generating image signals (S21), determining whether or not the objects from the generated image signals include faces and extracting display coordinates of faces in the case in which the objects include the faces (S22), setting a trigger signal detecting region for detecting trigger signals of the objects from the extracted display coordinates of faces and detecting the trigger signals in the set trigger signal detecting region (S23), and setting a gesture signal detecting region for detecting gesture signals of the objects in the case in which the trigger signals are detected and detecting the gesture signals in the set gesture signal detecting region (S24).

First, the images of the plurality of objects are input to the camera module including, a lens, an image sensor, and the like, such that the image signals are generated (S21). According to the embodiment of the present invention, the images of the plurality of objects may be input using a camera module including a standard image sensor. Therefore, the images of the plurality of objects may be input more easily as compared to other gesture recognition methods requiring an infrared (IR) light source and a dedicated sensor.

Next, the image signal processing unit 120 determines whether or not the objects include the faces from the generated image signals and extracts the display coordinates of faces in the case in which the objects include the faces (S22). In the case in which the objects do not include the faces, the gesture recognition method for a remote control apparatus according to the embodiment of the present invention does not proceed to the detecting of the trigger signals, which is not to consider an operation of a person who does not view an apparatus to be controlled as a meaningful operation.

In the case in which the display coordinates of faces are extracted, the trigger signal detecting region for detecting the trigger signals of the objects is set from the extracted display coordinates and the trigger signals are detected in the set trigger signal detecting region (S23). As described below, in order to determine an area of the trigger signal detecting region, areas of the faces need to be measured from the display coordinates of faces. That is, the trigger signal detecting region may be determined according to the areas of the faces of the objects measured previously and have an area corresponding to N times that of the faces of the objects.

The trigger signals are detected from the trigger signal detecting region. Here, the trigger signal may be a signal indicating an operation of horizontally waving a hand. In this case, when the trigger signal is detected by a preset number of times or more, for example, three times or more, it is considered that the trigger signal is detected, such that the gesture recognition method for a remote control apparatus according to the embodiment of the present invention may be proceed to the detecting of gesture signals (S24). This is to prevent an unintentional operation performed once by the object from being detected as the gesture signal.

Further, in the case in which the trigger signal is not detected from the object for which the detection of the trigger signal has been initiated, a control right may be handed over to another object. That is, the trigger signals may be detected in order for respective objects. In this case, the detection order of the trigger signals may depend on a size order of the areas of faces calculated from the display coordinates of faces. To this end, an index meaning an order of the control rights may be allocated to each object. That is, in this case, the allocated index may be indices sequentially allocated from 0 in an order of increasing size of the measured areas of faces.

More specifically, it may be required that the trigger signal is detected within a preset time and the control right may be handed over to another object in the case in which the trigger signal is not detected in the preset time. That is, the trigger signal of the object corresponding to the next trigger signal detecting order is detected. In the case in which the trigger signal are not detected from all objects even though the detection of the trigger signals of all objects has attempted in the scheme as described above, an object having the most preferential detection order again obtains the control right. To the contrary, in the case of detecting of the trigger signal, the control right is handed over to the corresponding object, such that other objects do not take the control right for a predetermined time.

In addition, the detection of the trigger signal may only be initiated in the case in which a position change of the object is equal to or smaller than a preset value, to thereby allow the gesture to be recognized only in the case in which the object requiring a control does not move. The gesture may be recognized only when the object stops, whereby accuracy on recognition of the gesture may be increased. Further, the detection of the trigger signal may only be initiated in the case in which an object including a face, a criterion for determining the trigger signal detecting region, is an object generating the trigger signal, to thereby prevent the remote control apparatus from being operated due to operations of other objects. More specifically, in the extracting display of the coordinates of faces (S22), a color level of the face may be measured, the measured color level of the face may be compared with a color level of a hand of the object generating the trigger signal, and it may be determined that the object including the face is the same as the object generating the trigger signal, when a difference between the color levels is equal to or smaller than a preset value.

In the case in which the trigger signals are detected, the gesture signal detecting region for detecting the gesture signals of the objects is set and the gesture signals are detected in the set gesture signal detecting region (S24).

As described below, in the case in which the gesture signals are detected in a preset number of unit blocks in the gesture signal detecting regions, it may be considered that the gesture signals are detected in the entirety of the gesture signal detecting regions. Once gesture signals are detected, the detecting of gesture signals (S24) is repeated, such that the detecting of gesture signals may be continuously performed. Here, in the case in which a termination signal to be described below is detected or gesture signals are not detected for a preset time, the repetition stops and the gesture recognition method for a remote control apparatus according to the embodiment of the present invention may return to the detecting of the trigger signals (S23).

In the gesture recognition method for a remote control apparatus according to the embodiment of the present invention, since both of the trigger signal detecting region and the gesture signal detecting region according to the trigger signal detecting region depend on a face recognition processing result, an operation for detecting a gesture may need not to be performed in the entire regions thereof. Therefore, gestures may be detected at a high speed. In addition, in the case in which a distance between the object and the apparatus to be remotely controlled increases, since the area of the face measured by a measuring device decreases, the trigger signal detecting region and the gesture signal detecting region also decrease. Therefore, in the case in which the object is distant from the apparatus to be remotely controlled, gestures may be detected at a high speed.

When the termination signal is detected, the detecting of gesture signals (S24) ends. As described below, according to the embodiment of the present invention, an operation of drawing a circle by hand, centered on the trigger signal detecting region may be considered as the termination signal. When the termination signal is detected, the gesture recognition method for a remote control apparatus according to the embodiment of the present invention may return to the detecting of the trigger signals (S23), such that the trigger signals may be again detected. Alternatively, when a change in the object is recognized, a process of performing the face recognition processing and setting the trigger signal detecting region from the face recognition processing result may be re-initiated.

FIG. 3 is a schematic view showing detection indices respectively allocated to a plurality of objects according to the embodiment of the present invention.

The detection indices may be integers sequentially allocated from 0 according to an order of the measured areas of faces of the objects. In the case in which a plurality of objects are present, detection indices may also coincide with an order of control rights of the plurality of objects. As shown in FIG. 3, since a face area of an object 1 is largest, the object 1 may be allocated a detection index of 0, and an object 2, an object 3, and an object 4 may be allocated a detection index of 1, a detection index of 2, and a detection index of 3, respectively. The trigger signals of the plurality of objects may be detected in the order of the allocated detection indices, and in the case in which there is an object from which a trigger signal has been detected, a gesture signal of the corresponding object may be detected.

FIG. 4 is a schematic view showing an area of a face and a trigger signal detecting region according to the area of the face according to the embodiment of the present invention.

The trigger signal detecting region may include a first trigger signal detecting region 420 positioned to the left of a face 410 and a second trigger signal detecting region 430 positioned to the right of the face 410. The trigger signal detecting region may have an area corresponding to N times that of a face of an object from which a trigger signal is to be detected. The first and second trigger signal detecting regions 420 and 430 may have a rectangular shape and the same width.

FIG. 5 is a schematic view showing the trigger signal detecting region and a gesture signal detecting region according to the trigger signal detecting region according to the embodiment of the present invention.

The gesture signal detecting region may be positioned to the left and the right of the face of the object and include a left gesture signal detecting region 520 including the first trigger signal detecting region 420 and all of the regions adjacent to the first trigger signal detecting region 420 and a right gesture signal detecting region 530 including the second trigger signal detecting region 430 and all of the regions adjacent to the second trigger signal detecting region 430. Here, the left gesture signal detecting region 520 may include a first gesture signal detecting region 521 adjacent to an upper boundary of the first trigger signal detecting region 420, a second gesture signal detecting region 522 adjacent to a lower boundary of the first trigger signal detecting region 420, a third gesture signal detecting region 523 adjacent to a left boundary of the first trigger signal detecting region 420, and a fourth gesture signal detecting region 542 adjacent to a right boundary of the first trigger signal detecting region 420, and the right gesture signal detecting region 530 may include a fifth gesture signal detecting region 531 adjacent to an upper boundary of the second trigger signal detecting region 430, a sixth gesture signal detecting region 532 adjacent to a lower boundary of the second trigger signal detecting region 430, a seventh gesture signal detecting region 533 adjacent to a left boundary of the second trigger signal detecting region 430, and an eighth gesture signal detecting region 534 adjacent to a right boundary of the second trigger signal detecting region 430. In this case, all of the first to eighth gesture signal detecting regions 521 to 534 may have the same area as each other and also have the same area as that of the first trigger signal detecting region 420 or the second trigger signal detecting region 430. Further, the gesture signal detecting region may have an area corresponding to M times that of the trigger signal detecting region.

Further, in order to detect the gesture signal, it may be desirable to secure both of the left gesture signal detecting region 520 and the right gesture signal detecting region 530. However, even in the case in which any one of the left gesture signal detecting region 520 and the right gesture signal detecting region 530 is secured, the gesture signal of the object may be detected. However, in the case in which neither the left gesture signal detecting region 520 nor the right gesture signal detecting region 530 is secured, for example, in the case in which neither the left gesture signal detecting region 520 nor the right gesture signal detecting region 530 is completely secured since the object is positioned at an edge portion of an image shown on an apparatus to be remotely controlled, the detecting of the gesture signals (S24) may not be initiated. That is, only in the case in which at least one of the left gesture signal detecting region 520 and the right gesture signal detecting region 530 is secured, the detecting of the gesture signals (S24) may be initiated. Alternatively, even in the case in which neither the left gesture signal detecting region 520 nor the right gesture signal detecting region 530 is secured, when the gesture signal detecting region has an area equal to or higher than a preset value, the detecting of the gesture signals (S24) may be also initiated.

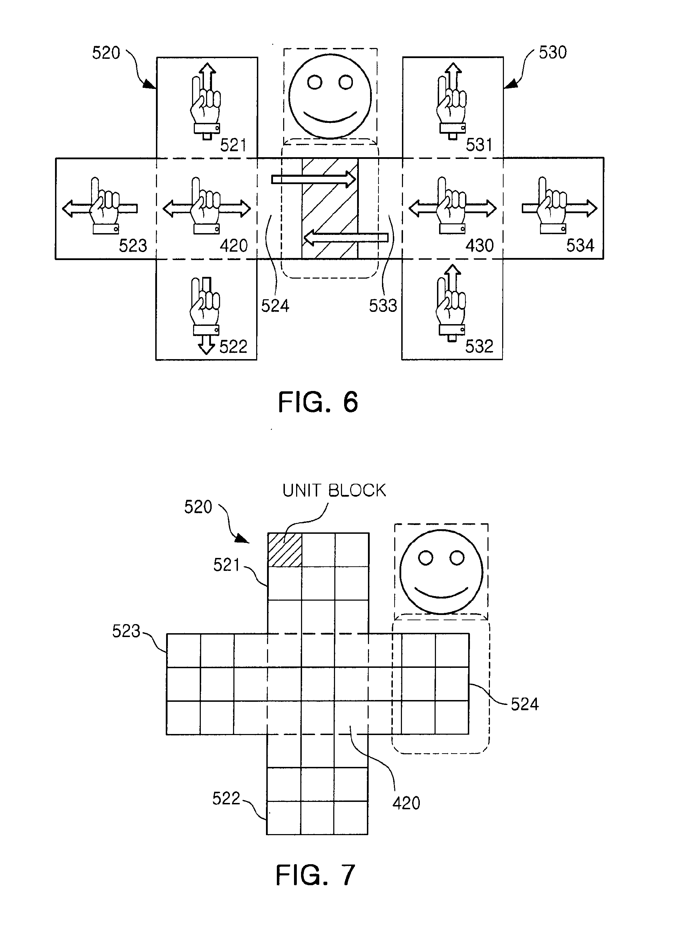

FIG. 6 is a schematic view showing the gesture signal detecting region and a gesture signal according to the embodiment of the present invention.

For example, in the case in which the object makes a gesture moving his/her hand leftward in the left gesture signal detecting region 520, the gesture signal may be detected in the third gesture signal detecting region 523. Further, in the case in which the object makes a gesture moving his/her hand downward, the gesture signal may be detected in the second gesture signal detecting region 522. As described above, in the case in which gesture signals are detected in respective gesture signal detecting regions, types of gestures made by the object may be recognized.

FIG. 7 is a schematic view showing the gesture signal detecting region and unit blocks according to the embodiment of the present invention.

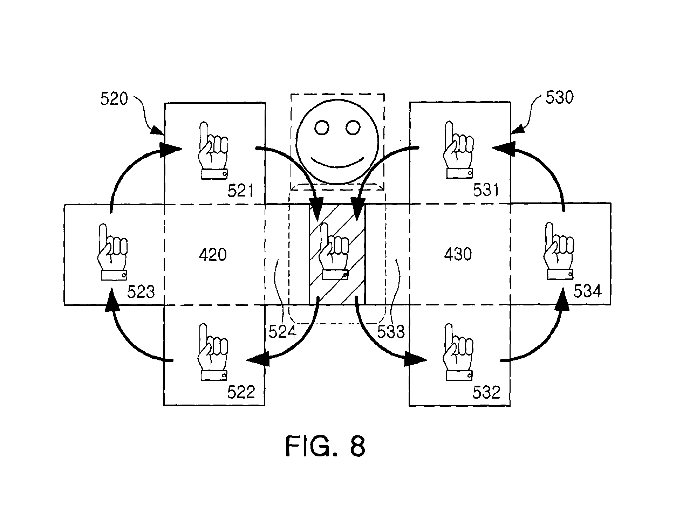

Each of the first to fourth gesture signal detecting regions 521 to 524 may be configured of n×n unit blocks. For example, as shown in FIG. 7, each of the first to fourth gesture signal detecting regions 521 to 524 may be configured of 3×3 unit blocks. As described above, the gesture signal detecting region includes two or more unit blocks and, in the case in which the gesture signal is detected in a preset number or more of unit blocks, it may be considered that the gesture signal is detected in the gesture signal detecting region. That is, when it is assumed that the preset number is 5 in the first gesture signal detecting region 521, in the case in which the gesture signal is detected in 7 unit blocks of the first gesture signal detecting region 521, it may be considered that the gesture signal is detected in the entirety of the first gesture signal detecting region 521. Determination as to whether or not the gesture signal has been detected in each unit block depends on a difference in a brightness level. That is, in the case in which the difference in a brightness level of the unit block over time is equal to or higher than a preset value, a hand may not have been positioned in the unit block and may have then been positioned in the unit block according to a change in time, and it may be considered that the gesture signal has been detected in the unit block. FIG. 8 is a schematic view showing the gesture signal detecting region and a stop signal according to the embodiment of the present invention.

The stop signal may be an operation of drawing a circle by the hand centered on the first trigger signal detecting region 420 or the second trigger signal detecting region, as described above. Here, in the case in which the gesture signal is detected in three or more of the first to fourth gesture signal detecting regions 521 to 524 or the gesture signal is detected in three or more of the fifth to eighth gesture signal detecting regions 531 to 534, it may be considered that the operation of drawing a circle is detected. In the case in which the termination signal is detected, the gesture recognition method for a remote control apparatus according to the embodiment of the present invention may return to the detecting of the trigger signals or the receiving of the images of the plurality of objects.

As set forth above, according to the embodiments of the present invention, the control rights may be allocated to the plurality of objects, the gesture signal may be continuously detected, and the initiation and the termination of the detection of the gesture signal may be controlled through the trigger signal and the termination signal.

While the present invention has been shown and described in connection with the embodiments, it will be apparent to those skilled in the art that modifications and variations can be made without departing from the spirit and scope of the invention as defined by the appended claims.

## Claims

1. A remote control apparatus comprising:
a camera module receiving images of a plurality of objects and generating image signals;
a image signal processing unit determining whether or not the objects include faces from the image signals generated in the camera module, and extracting display coordinates of faces when the objects include the faces;
a trigger signal detecting unit setting a trigger signal detecting region for detecting trigger signals of the objects from the display coordinates of faces extracted from the image signal processing unit and detecting the trigger signals in the set trigger signal detecting region; and
a gesture signal detecting unit setting a gesture signal detecting region for detecting gesture signals of the objects from the trigger signal detecting region set in the trigger signal detecting unit and detecting the gesture signals in the set gesture signal detecting region.

2. The remote control apparatus of claim 1, wherein the trigger signal detecting unit and the gesture signal detecting unit are the image signal processing unit.

3. The remote control apparatus of claim 1, wherein the trigger signal detecting unit calculates areas of the faces from the display coordinates of faces and sets the trigger signal detecting region having an area corresponding to N times that of the calculated areas of the faces.

4. The remote control apparatus of claim 1, wherein the trigger signal detecting region includes a first trigger signal detecting region positioned to the left of each of the faces and a second trigger signal detecting region positioned to the right of each of the faces.

5. The remote control apparatus of claim 4, wherein the gesture signal detecting region includes a left gesture signal detecting region including the first trigger signal detecting region and regions adjacent to the first trigger signal detecting region and a right gesture signal detecting region including the second trigger signal detecting region and regions adjacent to the second trigger signal detecting region.

6. The remote control apparatus of claim 5, wherein the left gesture signal detecting region includes a first gesture signal detecting region adjacent to an upper boundary of the first trigger signal detecting region, a second gesture signal detecting region adjacent to a lower boundary of the first trigger signal detecting region, a third gesture signal detecting region adjacent to a left boundary of the first trigger signal detecting region, and a fourth gesture signal detecting region adjacent to a right boundary of the first trigger signal detecting region, and the right gesture signal detecting region includes a fifth gesture signal detecting region adjacent to an upper boundary of the second trigger signal detecting region, a sixth gesture signal detecting region adjacent to a lower boundary of the second trigger signal detecting region, a seventh gesture signal detecting region adjacent to a left boundary of the second trigger signal detecting region, and an eighth gesture signal detecting region adjacent to a right boundary of the second trigger signal detecting region.

7. The remote control apparatus of claim 1, wherein the trigger signal detecting unit calculates areas of the faces from the display coordinates of faces and detects the trigger signals according to a size order of the calculated areas of faces.

8. The remote control apparatus of claim 1, wherein each of the trigger signals is a signal indicating an operation of horizontally waving a hand.

9. The remote control apparatus of claim 1, wherein the gesture signal detecting unit sets the gesture signal detecting region having an area corresponding to M times that of the trigger signal detecting region.

10. A gesture recognition method for a remote control apparatus, the gesture recognition method comprising:
receiving images of a plurality of objects from a camera module and generating image signals;
determining whether or not the objects include faces from the generated image signals and extracting display coordinates of faces when the objects include the faces;
setting a trigger signal detecting region for detecting trigger signals of the objects from the extracted display coordinates of faces and detecting the trigger signals in the set trigger signal detecting region; and
setting a gesture signal detecting region for detecting gesture signals of the objects when the trigger signals are detected and detecting the gesture signals in the set gesture signal detecting region.

11. The gesture recognition method of claim 10, wherein the trigger signal detecting region is set to have an area corresponding to N times that of areas of the faces calculated from the display coordinates of faces.

12. The gesture recognition method of claim 10, wherein the trigger signal detecting region includes a first trigger signal detecting region positioned to the left of each of the faces and a second trigger signal detecting region positioned to the right of each of the faces.

13. The gesture recognition method of claim 12, wherein the detecting of the trigger signals is only iniated when at least one of the first trigger signal detecting region and the second trigger signal detecting region is secured.

14. The gesture recognition method of claim 12, wherein the gesture signal detecting region includes a left gesture signal detecting region including the first trigger signal detecting region and regions adjacent to the first trigger signal detecting region and a right gesture signal detecting region including the second trigger signal detecting region and regions adjacent to the second trigger signal detecting region.

15. The gesture recognition method of claim 14, wherein the left gesture signal detecting region includes a first gesture signal detecting region adjacent to an upper boundary of the first trigger signal detecting region, a second gesture signal detecting region adjacent to a lower boundary of the first trigger signal detecting region, a third gesture signal detecting region adjacent to a left boundary of the first trigger signal detecting region, and a fourth gesture signal detecting region adjacent to a right boundary of the first trigger signal detecting region, and the right gesture signal detecting region includes a fifth gesture signal detecting region adjacent to an upper boundary of the second trigger signal detecting region, a sixth gesture signal detecting region adjacent to a lower boundary of the second trigger signal detecting region, a seventh gesture signal detecting region adjacent to a left boundary of the second trigger signal detecting region, and an eighth gesture signal detecting region adjacent to a right boundary of the second trigger signal detecting region.

16. The gesture recognition method of claim 15, wherein, when the gesture signals are each detected in three or more of the first gesture signal detecting region, the second gesture signal detecting region, the third gesture signal detecting region, and the fourth gesture signal detecting region or when the gesture signals are each detected in three or more of the fifth gesture signal detecting region, the sixth gesture signal detecting region, the seventh gesture signal detecting region, and the eighth gesture signal detecting region, it is considered that a termination signal terminating the detecting of gesture signals is detected.

17. The gesture recognition method of claim 10, wherein the trigger signals are detected according to a size order of areas of the faces calculated from the display coordinates of faces.

18. The gesture recognition method of claim 17, wherein when a trigger signal of an object among the trigger signals of the objects is not detected within a preset time, a trigger signal of an object having the next order is detected.

19. The gesture recognition method of claim 17, wherein when all of the trigger signals of the plurality of objects are not detected, a trigger signal of an object having the most preferential order, among the trigger signals of the objects, is detected.

20. The gesture recognition method of claim 10, wherein each of the trigger signals is a signal indicating an operation of horizontally waving a hand.

21. The gesture recognition method of claim 10, wherein the gesture signal detecting region has an area corresponding to M times that of the trigger signal detecting region.

22. The gesture recognition method of claim 10, wherein when a termination signal is detected in the gesture signal detecting region, the detecting of the gesture signals is terminated and the detecting of the trigger signals is initiated.

23. The gesture recognition method of claim 22, wherein the termination signal is an operation of drawing a circle centered on the trigger signal detecting region.

24. The gesture recognition method of claim 10, wherein the detecting of the trigger signals is only initiated when a change in a position of the objects is equal to or smaller than a preset value.

25. The gesture recognition method of claim 10, wherein the detecting of the gesture signals is initiated only when the gesture signal detecting region has an area equal to or higher than a preset value.

26. The gesture recognition method of claim 10, wherein the detecting of the gesture signals is initiated only when the trigger signals are detected by a preset number of times or more in the detecting of the trigger signals.

27. The gesture recognition method of claim 10, wherein when the gesture signal detecting region includes two or more unit blocks and the gesture signals are each detected in a preset number or more of unit blocks, it is considered that the gesture signals are detected in the gesture signal detecting region.

28. The gesture recognition method of claim 27, wherein when differences in a brightness level of unit blocks are equal to or higher than a preset value, it is considered that the gesture signals are detected in the unit blocks.

29. The gesture recognition method of claim 10, wherein the detecting of the trigger signals is initiated only when the objects including the faces are objects generating the trigger signals.

30. The gesture recognition method of claim 29, wherein when differences between color levels of the faces and color levels of hands of the objects generating the trigger signals are equal to or smaller than a preset value, it is considered that the objects including the faces are objects generating the trigger signals.

31. The gesture recognition method of claim 10, wherein the detecting of the gesture signals is repeated when the gesture signals are detected.

32. The gesture recognition method of claim 31, wherein when a termination signal is detected or the gesture signals are not detected for a preset time, the repetition stops and the detecting of the trigger signals is re-initiated.

33. A gesture recognition method for a remote control apparatus, the gesture recognition method comprising:
receiving images of a plurality of objects from a camera module and generating image signals;
determining whether or not the objects include faces from the generated image signals and extracting display coordinates of faces when the objects include the faces;
measuring areas of faces from the extracted display coordinates of faces and allocating detection indices to respective objects including the faces;
detecting trigger signals of the objects including the faces according to an order of the detection indices; and
detecting gesture signals of the objects from which the trigger signals are detected, when the trigger signals are detected.

34. The gesture recognition method of claim 33, wherein the detection indices are integers sequentially allocated from 0 in an order of increasing size of the measured areas of faces.
